# EUROPEAN PATENT SPECIFICATION

(11) **EP 3 381 675 B1**
(45) Date of publication and mention of the grant of the patent: **15.06.2022**
(21) Application number: 16868071.8
(22) Date of filing: 19.09.2016
(51) Int. Cl.: B32B 7/00, B32B 27/32, B32B 3/26, B32B 27/08

(54) **EXTENDIBLE POLYOLEFIN FILM THAT CAN BE PRODUCED BY JOINING TWO OR MORE CO-EXTRUDED POLYOLEFIN LAYERS, AND METHOD FOR THE PRODUCTION THEREOF**
DURCH VERBINDUNG ZWEIER ODER MEHRERER KOEXTRUDIERTER POLYOLEFINSCHICHTEN HERSTELLBARE AUSZIEHBARE POLYOLEFINFOLIE UND VERFAHREN ZUR HERSTELLUNG DAVON
PELLICULE EXTENSIBLE DE POLYOLÉFINE OBTENUE PAR LIAISON DE DEUX OU PLUSIEURS COUCHES DE POLYOLÉFINE CO-EXTRUDÉES ET PROCÉDÉ D'OBTENTION CORRESPONDANT

(30) Priority: 24.11.2015 ES 201531701
(43) Date of publication of application: 03.10.2018
(73) Proprietor: Ruiz Bernal, Francisco, 30500 Molina de Segura, Murcia (ES)
(72) Inventor: Ruiz Bernal, Francisco, 30500 Molina de Segura, Murcia (ES)
(74) Representative: Ungria López, Javier
(86) International application number: PCT/ES2016/070651
(87) International publication number: WO 2017/089632

(56) References cited:
- WO-A1-2016/088045
- ES-A1- 2 392 087
- ES-T3- 2 151 140
- ES-T3- 2 151 140
- ES-T3- 2 415 520
- PL-B1- 210 951
- US-A- 5 766 773
- US-A1- 2009 317 650
- US-A1- 2012 152 773
- DATABASE WPI Week 201175 Thomson Scientific, London, GB; AN 2011-M25281 XP002786637, & PL 388 990 A1 (FLEXPOL SPOLKA ZOO) 14 March 2011 (2011-03-14)

## Description

### TECHNICAL FIELD

The present invention relates to an extendible polyolefin film that can be produced by joining two or more co-extruded layers, which can be perforated in up to 70% of its surface without losing its mechanical strength properties. This film can be used in different sectors or applications, such a securing cargo on pallets or packaging perishable products, which characteristically require ventilation or temperature stabilization, such as plants, flowers, fruit or vegetables.

### BACKGROUND

The state of the art describes different solutions for producing extendible films that can maintain their properties of mechanical strength if they are micro or macro-perforated. This type of micro or macro-perforated film is used in different jobs and sectors.

One customary use consists of securing cargo on pallets, where the reduction of the material in the film due to the perforations reduces the weight of the rolls of extendible polyolefin film and reduces the quantity of waste material after products are unpacked.

Another sector that requires perforated films is the sector related to the packaging of perishable products, which characteristically require ventilation or temperature stabilization, such as, plants, flowers, fruit, or vegetables.

There are different solutions proposed to allow perforated extendible films to maintain their properties of mechanical strength, but in many case, they require the use of reinforcing strips or additional complementary elements.

The document EP0820856 (B1) describes a packaging film perforated by parallel columns of openings in the longitudinal direction, wherein the perforations have a thickened edge that overlaps with the thickened edge of the following opening, and wherein the openings cover between 30% and 70% of the surface of the stretched film.

The document EP1465766 (B1) discloses an extendible sheet that has multiple rows of openings, whose properties of mechanical strength are reinforced by the application of at least one layer of support strips that is extended in the longitudinal direction.

The document EP1768837 (B1) describes an extendible film that comprises a multiplicity of openings arranged in columns and that also comprises at least one reinforcing strip made of an extendible plastic material.

The document EP2473350 (B1) describes a pre-stretched extendible polyolefin film that has openings in a staggered arrangement in columns along the lengthwise of the longitudinal direction. In this film, the columns with perforations are separated laterally from each other by columns with no openings. In preferred embodiments of this invention, the edge of the film, corresponding to the final column without lateral openings, is folded over.

The document US 5766773 (A) describes a stretch film, comprising a first extruded sheet of polyethylene stretch film; a second extruded sheet of polyethylene stretch film, wherein the first extruded sheet of polyethylene stretch film is comprised of at least three coextruted layers and the second extruded sheet of polyethylene stretch film is comprised of at least three coextruted layers, and its use for wrapping pallets.

The object of the present invention is a new extendible film that enables the increase of the mechanical strength and the reduction of the weight per meter. This new material can be used in different sectors or applications, such a securing cargo on pallets or packaging perishable products, which characteristically require ventilation or temperature stabilization.

This material may be used with or without a large number of large perforations without the loss of its properties of mechanical strength and without the need to incorporate reinforcing strips or additional complementary elements. Its perforations may cover up to 70% of its surface per square meter, making it possible to reduce the weight, but not the strength after its placement or application on packages.

These characteristics make it possible to conform to the increasingly demanding regulations that are aimed at reducing the final waste volume.

### DESCRIPTION OF THE INVENTION

Thus, according to claim 1, a first object of the invention is an extendible polyolefin film that comprises two or more co-extruded layers of polyolefin produced using a method characterized by comprising the joining of said layers in opposing directions, in the longitudinal direction of the molecular chains of the layers.

According to claim 7, the object of the invention is likewise the method for producing the claimed extendible polyolefin film characterized by comprising the joining of two or more layers of polyolefin film co-extruded in opposing directions, in the longitudinal direction of the molecular chains of the layers.

In addition, the object of the invention is the use of the claimed film to firmly secure loads to pallets and/or to wrap perishable products, according to claim 13.

### BRIEF DESCRIPTION OF THE FIGURES

- **Figure 1** shows a simulation of bundles of molecules in an extendible polyolefin film already extruded from the state of the art, which shows that all of the polymer units are oriented in the same direction.
- **Figure 2** shows a simulation of bundles of molecules in the extendible polyolefin film already extruded of the present invention, which shows that polymer units are oriented in opposing directions.

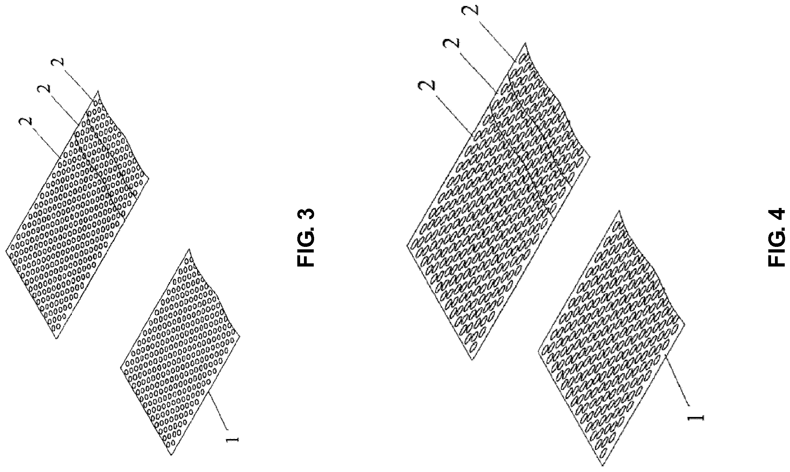

- **Figure 3** shows a single layer of polyolefin (1) and the resulting multi-layer polyolefin film (2) before being subjected to the stretching process.
- **Figure 4** shows a single layer of polyolefin (1) and the resulting multi-layer polyolefin film (2) after being subjected to the stretching process.

### DETAILED DESCRIPTION OF THE INVENTION

According to claim 1, the present invention relates to an extendible polyolefin film characterized by comprising the joining of two or more layers of polyolefin film co-extruded in opposing directions, in the direction longitudinal of the molecular chains of the layers, which is understood as the strength defined by the orientation of its structure and which allows the film to be stretched.

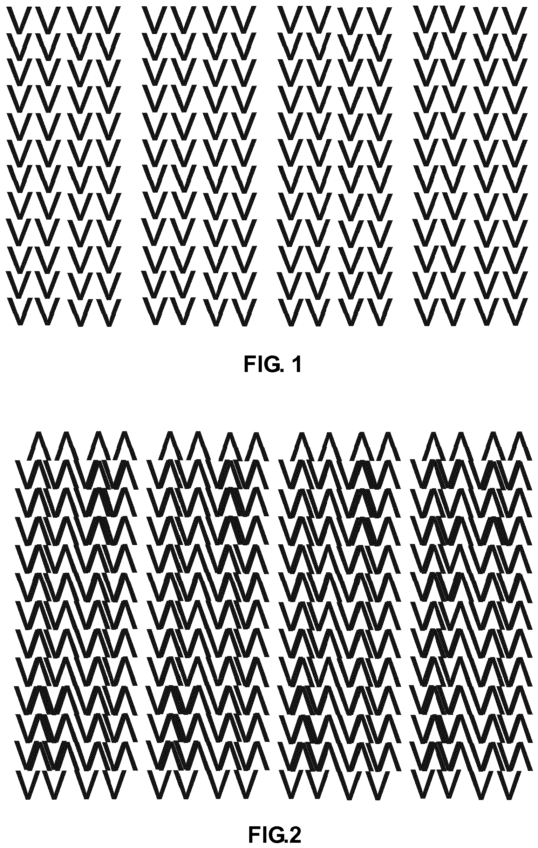

In the known plastic materials, the polyolefins possess properties of linear strength mainly determined due to the fact that they are made up of molecular chains aligned in the longitudinal direction of unrolling (Figure 1). In the present invention, two or more layers of polyolefin are co-extruded and joined in opposing directions, in the direction of their natural linear strength such that the bundles of molecular chains that make them up come into conflict with each other (Figure 2). Therefore, the unaligned molecules can exert strength in opposing directions.

Viewed under a microscope, the molecular chains show that the bundles aligned in opposing directions are interlinked and their strength is multiplied. This makes it possible to use thinner film thicknesses to achieve the same mechanical strength as a conventional film, which significantly reduces the amount of material used. The percentage reduction in the thickness of the claimed film with respect to an equivalent conventional film is very variable and will depend on the initial weight of the polyolefin layers or sheets.

Due to the properties of mechanical strength achieved by the orientation of the molecular chains in each polyolefin layer, the extendible polyolefin film claimed does not require additional reinforcement, such as, for the purposes of illustration and not limitation, plastic strips or supports adhered between rows of openings, hemmed edges, or edges thickened between adjacent openings.

The two or more layers of polyolefin of the film of the present invention are preferably layers of polyethylene. The polyethylene may in turn be selected, preferably, but not for the purposes of limitation, from among polyethylene butylene, polyethylene octene, and metallocene polyethylene. The two or more layers of polyolefin may be combinations of the same type of polyolefin, or combinations of different types of polyolefin. These combinations of at least two polyolefins may be, for the purposes of illustration and not limitation, polyethylene octene - polyethylene octene; metallocene polyethylene - metallocene polyethylene; polyethylene butylene - polyethylene butylene; or polyethylene octene - polyethylene butylene.

In a preferred embodiment of the present invention, the multi-layer film of polyolefin comprises two layers of polyethylene octene.

All of these materials provide the necessary hygiene-health conditions to be in contact with food.

Optionally, the extendible polyolefin film claimed may additionally be pre-stretched. In the process of producing the extendible polyolefin film, the pre-stretching stage is carried out before or after the joining of the different co-extruded layers of polyolefin.

This increases performance considerably (around 300 - 600%, depending on the number of meters), which results in a saving in terms of raw materials, waste, and energy costs.

The extendible polyolefin film claimed may be stretched until it reaches a maximum length (Lm). Nevertheless, it offers the possibility of applying an additional force, forcing the stretching of the film up to an additional 5-6% beyond the Lm. However, said film has a memory effect and elastic force, such that it has a natural tendency to return to the value of Lm. This property can be used to increase the holding power, making it especially well-suited to firmly secure cargo to pallets. It should be noted that the holding power that is achieved is greater than the holding power achieved by conventional multi-layer films.

In addition, the polyolefin film of the present invention offers the advantage of being more puncture resistant thanks to the force exerted by the molecules that make it up. The film offers the advantage over the state of the art of being able to be perforated in up to 70% of its surface without losing its mechanical strength properties, which reduces the amount of material (with the consequent economic savings), as well as the final waste product.

In preferred embodiments in which the film is perforated, the openings allow rapid removal of heat until ambient temperature is attained. Heat or cold may be harmful due to the formation of condensates when the product is packaged. This new material avoids unnecessary down time, because it quickly stabilizes the temperature reached during production to ambient temperature. This avoids the greenhouse effect due to the accumulation of temperature inside the pallet.

According to claim 7, the object of the present invention is likewise a method for producing the extendible polyolefin film described above, wherein two or more layers of polyolefin film co-extruded in opposing directions, in the longitudinal direction of the molecular chains of the layers, are joined.

This method is based on the cold-punching procedure described in invention patent number ES 2393883 B1. Summing up, the manufacturing process of the extendible polyolefin film that is the object of the present invention comprises the following stages:
- optionally, the perforation of the layers of polyolefin when passing through at least one roller punch.
- the joining of two or more layers of polyolefin co-extruded in opposing directions, in the direction of their natural linear strength;
- optionally, the stretching of the film produced by the joining of the layers of polyolefin. This stretching stage may be carried out before or after the joining of the layers of polyolefin. Specifically, in those cases in which a printing stage is carried out, the stretching will be carried out previously, because stretching after printing would deform the printing; and
- optionally, the winding of the resulting film on an output roll.

The manufacturing process described above is preferably carried out using the cold-punching machine disclosed in invention patent number ES 2392087 B1. In the context of the present invention, cold punching is understood to be a punching process at an ambient temperature of approximately 18- 25°C.

In the method of the present invention, the film may be perforated in up to 70% of its surface. This allows scrap material to be recycled for reuse in new polyolefin products.

Thanks to the joining of at least two layers of materials and their perforation, an extendible polyolefin film with the following characteristics is produced:
- smaller volume of material (a reduction of up to 70% with respect to conventional films), and therefore smaller volume of waste after unpacking and lower weight of the rolls of film;
- thinner than conventional film, to achieve the same or more holding force;
- greater holding force than conventional film (with holding force understood
- as the mechanical strength for securing cargo); and
- greater puncture resistance than conventional film.

The method described here also applies printing (such as advertising printing) on the interior of the extendible polyolefin film. This process of advertising printing may be carried out preferably after a pre-stretching stage on at least one of the layers of polyolefin. In this case, the complementary unprinted layer may be prepared with a double layer of adhesive to later join the two layers, thus producing the extendible polyolefin film with advertising printing.

As indicated before, the invention offers the advantage over other products of the state of the art of producing an extendible polyolefin film that with a thickness less than or equal to 6 microns (for example), achieves properties of mechanical strength that are comparable to conventional films with a thickness of more than 25 microns. Depending on the type of material, values higher or lower than the specified values may be achieved, although the thickness required to achieve a particular mechanical strength will always be less than the conventional thicknesses in this type of sheets.

### EXAMPLES

The following section describes several examples of the present invention, although the scope of the invention is not limited to the specific conditions of each one.

### EXAMPLE 1

In a specific embodiment of the invention, the polyolefin film that is the object of the invention is provided on a roll 50 cm wide (conventional measurement). However, the invention can be adapted to any mechanized system with the possibility of choosing the strip width needed to wrap loads using modular and independent rolls, which may be joined together on the roll-holder carriage of the wrapping machines.

If machines without a pre-stretching system are used, the product can be supplied pre-stretched on a roll between 2,500 and 5,000 meters long.

Typically, for every 1,200 meters of unstretched film, 4,000 meters of stretched material can be obtained, maintaining all of the properties of holding power and without the need for reinforcing strips or complementary systems.

### EXAMPLE 2

As an alternative, the conventional roll 50 cm wide has a longitudinal central cut that divides the roll into two identical parts, such that depending on the load to be wrapped, and without modifying the parameters of the wrapping machine, the user may:
- use only half of the roll, with the consequent savings;
- increase ventilation; and/or
- obtain two identical smaller rolls.

### EXAMPLE 3

The film of the present invention can also be supplied in a small format, with a width of 15 cm, optionally with or without a spindle extension that serves as a handle for manual use. No commercial products were found that describe perforated extendible polyolefin films with these dimensions and that do not incorporate reinforcing strips or additional complementary elements.

### EXAMPLE 4

The film of the present invention can be used additionally in packaging of trays of fruit and vegetables, because it allows perforations similar to those in a mesh to be made, in all or part of the sheet. These perforations make it possible to regulate the cold aeration that is necessary to conserve the product. The perforations likewise also make it possible to control the rapid evacuation of the ethylene gas produced naturally during the ripening of fruits and vegetables, prolonging their life span inside the packaging for display and sale, without the need to use chemical products such as stabilizers, anti-fog agents, or chemical retardants.

## Claims

1. An extendible polyolefin film that comprises two or more co-extruded layers of polyolefin produced using a method **characterized by** comprising the joining of said layers of polyolefin co-extruded in opposing directions, in the longitudinal direction of the molecular chains of the layers..

2. The film according to claim 1, wherein the film is perforated in up to 70% of its surface.

3. The film according to claim 1 or 2, wherein the two or more layers of polyolefin are layers of polyethylene, which is selected from a group that consists of polyethylene butylene, polyethylene octene, and metallocene polyethylene, and wherein the two or more layers of polyolefin are combinations of the same type of polyolefin, or combinations of different types of polyolefin.

4. The film according to claim 3, wherein the two or more layers of polyolefin are layers of polyethylene octene.

5. The film according to any of the claims 1 to 4, wherein the film is pre-stretched.

6. The film according to any of the claims 1 to 5, wherein the film includes advertising printing.

7. A method for the production of an extendible polyolefin film **characterized by** comprising the joining of two or more layers of polyolefin film co-extruded in opposing directions, in the longitudinal direction of the molecular chains of the layers.

8. The method according to the previous claim, wherein the film is produced by cold punching.

9. The method according to claim 7 or 8, wherein the extendible polyolefin film is perforated in up to 70% of its surface.

10. The method according to any of the claims 7 to 9, wherein the two or more layers of polyolefin are layers of polyethylene, which is selected from a group that consists of polyethylene butylene, polyethylene octene, and metallocene polyethylene, and wherein the two or more layers of polyolefin are combinations of the same type of polyolefin, or combinations of different types of polyolefin.

11. The method according to claim 10, wherein the two or more layers of polyolefin are layers of polyethylene octene.

12. The method according to any of the claims 7 to 11, wherein printing is applied to the interior of the extendible polyolefin film.

13. The use of the extendible polyolefin film according to any of the claims 1 to 6 to firmly secure cargo on a pallet.

14. The use of the extendible polyolefin film according to any of the claims 1 to 6 to wrap a perishable product.

## Patentansprüche

1. Dehnbare Polyolefin-Folie, die zwei oder mehr koextrudierte Schichten aus Polyolefin umfasst, die unter Einsatz eines Verfahrens hergestellt wird, das **dadurch gekennzeichnet ist, dass** es das Verbinden der in entgegengesetzten Richtungen koextrudierten Schichten aus Polyolefin in der Längsrichtung der Molekülketten der Schichten umfasst.

2. Folie nach Anspruch 1, wobei die Folie in bis zu 70 % ihrer Oberfläche perforiert ist.

3. Folie nach Anspruch 1 oder 2, wobei die zwei oder mehr Schichten aus Polyolefin Schichten aus Polyethylen sind, das aus einer Gruppe ausgewählt wird, die aus Polyethylenbutylen, Octen-Polyethylen und Metallocen-Polyethylen besteht, und wobei die zwei oder mehr Schichten aus Polyolefin Kombinationen des gleichen Typs von Polyolefin oder Kombinationen unterschiedlicher Typen von Polyolefin sind.

4. Folie nach Anspruch 3, wobei die zwei oder mehr Schichten aus Polyolefin Schichten aus Octen-Polyethylen sind.

5. Folie nach einem der Ansprüche 1 bis 4, wobei die Folie vorgestreckt ist.

6. Folie nach einem der Ansprüche 1 bis 5, wobei die Folie einen Werbeaufdruck enthält.

7. Verfahren für die Herstellung einer dehnbaren Polyolefin-Folie, **dadurch gekennzeichnet, dass** es das Verbinden von zwei oder mehr in entgegengesetzten Richtungen koextrudierter Schichten aus Polyolefin-Folie in der Längsrichtung der Molekülketten der Schichten umfasst.

8. Verfahren nach dem vorangehenden Anspruch, wobei die Folie mittels Kaltlochen (cold punching) hergestellt wird.

9. Folie nach Anspruch 7 oder 8, wobei die dehnbare Polyolefin-Folie in bis zu 70 % ihrer Oberfläche perforiert ist.

10. Verfahren nach einem der Ansprüche 7 bis 9, wobei die zwei oder mehr Schichten aus Polyolefin Schichten aus Polyethylen sind, das aus einer Gruppe ausgewählt wird, die aus Polyethylenbutylen, Octen-Polyethylen und Metallocen-Polyethylen besteht, und wobei die zwei oder mehr Schichten aus Polyolefin Kombinationen des gleichen Typs von Polyolefin oder Kombinationen verschiedener Typen von Polyolefin sind.

11. Verfahren nach Anspruch 10, wobei die zwei oder mehr Schichten aus Polyolefin Schichten aus Octen-Polyethylen sind.

12. Verfahren nach einem der Ansprüche 7 bis 11, wobei die Innenseite der dehnbaren Polyolefin-Folie bedruckt wird.

13. Einsatz der dehnbaren Polyolefin-Folie nach einem der Ansprüche 1 bis 6 zum festen Sichern von Frachtgut auf einer Palette.

14. Einsatz der dehnbaren Polyolefin-Folie nach einem der Ansprüche 1 bis 6 zum Umhüllen eines verderblichen Erzeugnisses.

## Revendications

1. Film de polyoléfine extensible qui comprend deux ou plus de deux couches coextrudées d'une polyoléfine, produit par utilisation d'un procédé **caractérisé en ce qu'**il comprend la jonction desdites couches de polyoléfine coextrudées dans des directions opposées, dans la direction longitudinale des chaînes moléculaires des couches.

2. Film selon la revendication 1, dans lequel le film est perforé dans jusqu'à 70 % de sa surface.

3. Film selon la revendication 1 ou 2, dans lequel les deux ou plus de deux couches de polyoléfine sont des couches d'un polyéthylène, qui est choisi dans le groupe constitué par un polyéthylène-butylène, un polyéthylène-octène, et un métallocène-polyéthylène, et dans lequel les deux ou plus de deux couches de polyoléfine sont des combinaisons du même type de polyoléfine ou des combinaisons de types différents de polyoléfine.

4. Film selon la revendication 3, dans lequel les deux ou plus de deux couches de polyoléfine sont des couches de polyéthylène-octène.

5. Film selon l'une quelconque des revendications 1 à 4, lequel film est pré-étiré.

6. Film selon l'une quelconque des revendications 1 à 5, lequel film contient une impression publicitaire.

7. Procédé pour la production d'un film de polyoléfine extensible, **caractérisé en ce qu'**il comprend la jonction de deux ou plus de deux couches de film de polyoléfine coextrudées dans des directions opposées, dans la direction longitudinale des chaînes moléculaires des couches.

8. Procédé selon la revendication précédente, dans lequel le film est produit par poinçonnage à froid.

9. Procédé selon la revendication 7 ou 8, dans lequel le film de polyoléfine extensible est perforé dans jusqu'à 70 % de sa surface.

10. Procédé selon l'une quelconque des revendications 7 à 9, dans lequel les deux ou plus de deux couches de polyoléfine sont des couches d'un polyéthylène, qui est choisi dans le groupe constitué par un polyéthylène-butylène, un polyéthylène-octène, et un métallocène-polyéthylène, et dans lequel les deux ou plus de deux couches de polyoléfine sont des combinaisons du même type de polyoléfine ou des combinaisons de types différents de polyoléfine.

11. Procédé selon la revendication 10, dans lequel les deux ou plus de deux couches de polyoléfine sont des couches de polyéthylène-octène.

12. Procédé selon l'une quelconque des revendications 7 à 11, dans lequel l'impression est appliquée à l'intérieur du film de polyoléfine extensible.

13. Utilisation du film de polyoléfine extensible selon l'une quelconque des revendications 1 à 6 pour fixer fermement un chargement sur une palette.

14. Utilisation du film de polyoléfine extensible selon l'une quelconque des revendications 1 à 6 pour envelopper un produit périssable.
